# EUROPEAN PATENT APPLICATION

(11) **EP 4 632 019 A1**
(43) Date of publication of application: **15.10.2025**
(21) Application number: 24208800.3
(22) Date of filing: 24.10.2024
(51) Int. Cl.: C09D 5/16, B05D 7/00, C09D 7/61, C09D 7/63, C09D 7/40, C09D 175/04, D06M 11/01, D06M 15/564, C09D 7/62

(54) **COATING COMPOSITION FOR ARTIFICIAL LEATHER, METHODS AND USES THEREOF**

(30) Priority: 12.04.2024 PT 2024119393
(71) Applicant: TMG - Tecidos Plastificados e Outros Revestimentos para a Indústria Automóvel, S.A., 4770-583 São Cosme do Vale (PT)
(72) Inventor: CARVALHO DA SILVA, Luis Filipe, 4770-583 SÃO COSME VALE (PT); SILVA RIBEIRO, Filipe Miguel, 4770-583 S. COSME DO VALE (PT); LEBRE SANTOS SILVA, Carolina, 4770-583 S. COSME DO VALE (PT); GUIMARÃES COELHO, Lorena Henrique, 4760-034 VILA NOVA DE FAMALICÃO (PT); DE SOUSA MONTEIRO, Andreia Sofia, 4760-034 VILA NOVA DE FAMALICÃO (PT); OSÓRIO PEREIRA, Mariana, 4760-034 VILA NOVA DE FAMALICÃO (PT)
(74) Representative: Patentree

(57) **Abstract**

The present disclosure relates to a coating composition for a fabric or polymeric substrate comprising 0.5-60% (w/w) of silica nanoparticles and a suitable solvent and to a coating film comprising: at least one layer of polydimethylsiloxane obtainable from the polycondensation of a carbon precursor; and a lacquer wherein the at least one layer of polydimethylsiloxane is coated on top of the lacquer. An article comprising the disclosed coating composition or coating film is also disclosed.

## Description

### TECHNICAL FIELD

The present disclosure relates to a coating composition with easy-to-clean properties, and to its use in automotive applications, preferably its use on multi-layered polymer based artificial leather materials.

### BACKGROUND

The increasing interest of final consumers on innovative and smart surfaces and the new challenges on surface cleanability of shared vehicles, makes the repellence and easy to clean surfaces an essential requirement for the Original Equipment Manufacturers (OEMs).

The development of an effective system that is easy to clean is highly dependent on chemical modification and/or the morphology of the substrate surface. While the chemical modification is related to a decrease of the surface energy of the substrate surface, changes in the morphology of the surface can be tuned usually by coating said surface with spherical particles, without cavities and/or interstices. That minimizes the sites for anchoring dirt particles, giving easy-cleaning properties to the substrates.

The achievement of improved cleaning properties through the application of fluorinated silica nanoparticles has been widely studied in various types of materials (aluminum, silicon, textile glass) using fluorinated silanes (FAS) as silica precursors. However, results concerning the study of polyvinyl chloride (PVC) and thermoplastic polyurethane (TPU) base substrates modified with fluorinated silica nanoparticles for automotive interiors are scarce. In place of these materials, most of the studies described in the State of the Art demonstrate the preparation of these surfaces using complex and high temperature processes, as well as high-cost materials. Additionally, the identified studies mention only the preparation of (super)hydrophobic surfaces, disregarding the amphiphobic repellent effect (water and oil, simultaneously).

Commercially, the easy cleaning solutions found still refer to end-user use solutions, that is, application after the production of the substrate, not being an intrinsic property of the material. The study of the attribution of amphiphobic characteristics to PVC and TPU base substrates is still recent and scarce, presenting some limitations such as lack of durability, homogeneity, and unwanted aesthetic alterations.

The omniphobic concept is more comprehensive about easy cleaning functionality, since it considers repellent properties to a greater diversity of liquids, in addition to water and oils, making it quite interesting for applications such as car upholstery.

Document CN207997643U describes an easy-to-clean, stain-resistant and wear-resistant nano-coating structure for automotive leather interior parts, characterized in that it comprises a base fabric layer (1), a leather surface layer (3), an isolation coating (4) and a functional layer (5), said leather surface layer (3) having a base fabric layer (1) bonded to its lower surface by an adhesive layer (2), said leather surface layer (3) having an isolation coating (4) coated on its upper surface, said functional layer (5) being coated on the surface of the isolation coating (4), said functional layer (5) being a double-terminated isocyanate-based polyurethane prepolymer coating. This document does not relate to the treatment of artificial leather (PVC, TPU or PVU-based artificial leather) to confer self-cleaning capabilities to this material.

Document US20090263586 relates to a method of producing a self-cleaning surface on a substrate. A coating with hydrophilic surface components is applied to the substrate and a structure formed in the nanometre range or a combined structure in the nano- and micrometre ranges.

These facts are disclosed to illustrate the technical problem addressed by the present disclosure.

### GENERAL DESCRIPTION

The present disclosure relates to a coating composition for artificial leather materials that makes it easier to clean said coated artificial leather materials, maintaining the colour, gloss and emboss of the material. The coating composition of the present disclosure enhances the cleanability of the surface, making it easier to remove dirt and stains, while maintaining the material's original color, gloss, and emboss (textured surface).

An aspect of the present disclosure comprises an artificial leather material (such as PVC, TPU, TPO, or others) coated with the disclosed compositions, showing improved cleaning properties. Preferably, the artificial leather material is used in the interior of vehicles.

Surprisingly, the cleanability of the artificial leather materials coated with the disclosed coating composition improves at least 2 to 4 times when compared with the state-of-the-art materials without affecting the translucency, gloss, and colour of the material.

Nowadays, the ability of a material to repel dirt and be easily cleaned is a concept increasingly demanded mainly because in recent years the trend is to develop materials increasingly clear and with lighter colours. Because of this aspect, having an easy to clean surface presents an advantage in the market compared to the usual materials. The solution for this need is to change the formulation of the finishing layers adding raw materials that can add this function of easy cleanliness without compromising other important properties such as, abrasion resistance, staining resistance etc.

The present disclosure relates to a coating composition for a fabric or polymeric substrate comprising 0.5-60% (w/w) of silica nanoparticles and a suitable solvent. The coating composition can be applied to various types of artificial leather materials, including PVC, TPU, and TPO, improving their cleanability by at least 2 to 4 times compared to the current state-of-the-art materials. Importantly, this enhancement does not affect the material's translucency, gloss, or color.

In an embodiment, the silica nanoparticles are fluorinated silica nanoparticles or alkyl silica nanoparticles. In a further embodiment, the alkyl silica nanoparticles comprise an alkyl organosilane, preferably an alkyl C18.

In an embodiment, the fluorinated silica nanoparticles comprise a fluorinated organosilane, preferably C6- fluorinated organosilane.

In an embodiment, the coating composition further comprises an additive, wherein the additive is selected from a list consisting of: fluorine C6 compounds, water-based dispersion based on polyethylene wax, water-based dispersion based on polypropylene wax, micronized polypropylene wax, micronized Polyethylene wax, dispersion of a fluoroacrylate copolymer, glyceryl mono oleate composition, N, N'-ethylene-bis-stearamide or combinations thereof. The additive in some case may be a lubricant.

In an embodiment, the coating composition comprises 0.5-30 %(w/w) of silica nanoparticles; and 5-80 % (w/w) of the additive.

In a preferred embodiment, the coating composition comprises 1-20% (w/w) of silica nanoparticles; and 10-20 % (w/w) of the additive.

In an embodiment, the coating composition comprises 1-20% (w/w) of silica nanoparticles; and 10-20 % (w/w) of the additive, and a lacquer wherein the additive is selected form a list comprising fluorine C6 compounds, water-based dispersion based on polyethylene wax, water-based dispersion based on polypropylene wax, micronized polypropylene wax, micronized Polyethylene wax, dispersion of a fluoroacrylate copolymer, and combinations thereof. Preferably, the additive is selected from a list consisting of fluorine C6 compounds, water-based dispersion based on polyethylene wax, water-based dispersion based on polypropylene wax, micronized polypropylene wax, micronized Polyethylene wax, dispersion of a fluoroacrylate copolymer, and combinations thereof.

In another embodiment, the coating composition comprises 1-20% (w/w) of silica nanoparticles; and 10-20 % (w/w) of the additive, wherein the additive is selected from a list comprising glyceryl mono oleate composition, micronized polypropylene wax, N, N'-ethylene-bis-stearamide. Preferably, the additive is selected from a list consisting of glyceryl mono oleate composition, micronized polypropylene wax, N, N'-ethylene-bis-stearamide.

In an embodiment, the composition further comprises a lacquer, hand modifiers, crosslinkers, co-solvents, stabilizers, rheological modifiers, levelling agents, mating or glossing agents, or mixtures thereof.

For the scope and interpretation of the present disclosure, a "hand modifier" is a compound used to improve the hand-feel of leather, or synthetic leather, surfaces. Hand modifiers are mostly for use in top coats for a range of leather applications, from automotive goods or upholstery. These modifiers can be silicone, wax, polymer or surfactants, and can provide wet and dry abrasion resistance and non-yellowing properties.

In an embodiment, the lacquer is polyurethane-based lacquer.

In an embodiment, the lacquer further comprises a solvent, a thickener, a silicone and/or a crosslinker.

In an embodiment, the coating composition comprises 1-60% (w/w) of silica nanoparticles; and 15-99 % (w/w) of a lacquer.

In an embodiment, the coating composition comprises 1-20% (w/w) of silica nanoparticles; and 20-99 % (w/w) of a lacquer.

In an embodiment, the size of the silica nanoparticles ranges from 50-300 nm as measured by scanning electron microscopy. In a further embodiment, the size of the silica nanoparticles ranges from 50-120 nm as measured by scanning electron microscopy, preferably from 100 - 115 nm.

In an embodiment the substrate is artificial leather, polyvinyl chloride, polyurethane, thermoplastic elastomers, or combinations thereof.

In an embodiment the suitable solvent is a polar solvent, preferably ethanol, methanol, acetone, or isopropanol.

An aspect of the present disclosure relates to a kit comprising a first part comprising a solution of 1-60% (w/w) of silica nanoparticles, preferably fluorinated silica nanoparticles or alkyl silica nanoparticles, and suitable solvent; and a second part comprising a solution comprising a lacquer and an additive.

In an embodiment, the second part comprises a solution comprising 80 to 90% (w/w) of a lacquer and 10 to 20% of an additive.

In an embodiment, the lacquer is polyurethane-based lacquer, preferably further comprising a solvent, a thickener, a silicone and/or a crosslinker.

In an embodiment, the additive is selected from a list consisting of: fluorine C6 compounds, water-based dispersion based on polyethylene wax, water-based dispersion based on polypropylene wax, micronized polypropylene wax, micronized Polyethylene wax, dispersion of a fluoroacrylate copolymer, glyceryl mono oleate composition, N, N'-ethylene-bis-stearamide or combinations thereof.

The present disclosure also relates to a coating film comprising: at least one layer of polydimethylsiloxane obtainable from the polycondensation of a carbon precursor; and a lacquer wherein the at least one layer of polydimethylsiloxane is coated on top of the lacquer.

In an embodiment, the carbon precursor is selected from a C1 monomer, C2 monomer or C18 monomer. In a further embodiment, the carbon precursor is selected form a list comprising methyltrimetoxysilane (C1), methoxy-[[methoxy(dimethyl)silyl]methyl]-dimethylsilane (C2), and octadecyltrimethoxysilane (C18).

In an embodiment, the lacquer is polyurethane-based lacquer.

An aspect of the present disclosure relates to an article comprising the disclosed coating composition or coating film.

In an embodiment, said article is an upholstery article, a seat, a door panel, or an automotive interior trim.

In an embodiment, the article comprises the disclosed coating composition, wherein the silica nanoparticles are comprised in a top layer; and wherein the thickness of said top layer ranges from 5 to 50 µm, preferably 10 to 20 µm; measured by scanning electron microscopy.

In an embodiment, the article further comprises a basecoat layer. In a preferred embodiment, the basecoat is selected from a list comprising polyurethane, acrylates, silicon, vinyl, PUR-vinyl, vinyl-acrylate or mixtures thereof.

### BRIEF DESCRIPTION OF THE DRAWINGS

The following figures provide preferred embodiments for illustrating the disclosure and should not be seen as limiting the scope of invention.

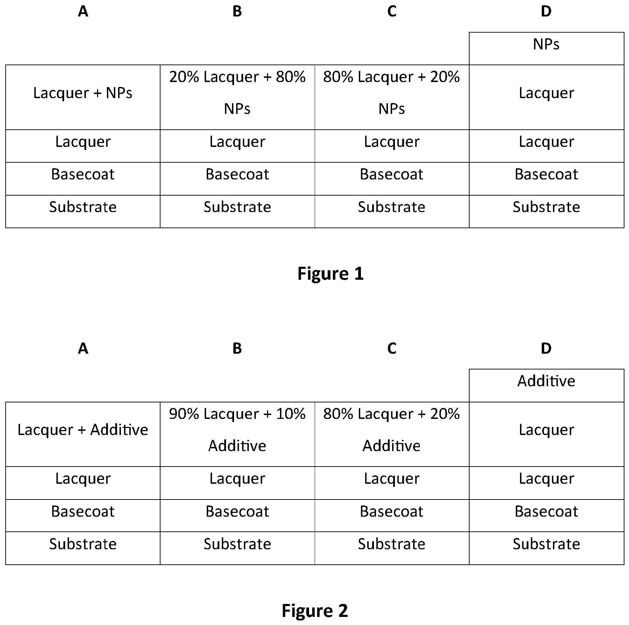

**Figure 1**: Schematic representation of A) an embodiment of substrate coated with an embodiment of the disclosed coating composition (lacquer + NPs); B) embodiment of a substrate coated with a basecoat, a lacquer layer, and a top layer comprising the disclosed coating composition comprising 20% (w/w) lacquer and 80% (w/w) of a lacquer with nanoparticles (NPs), making up a final concentration of 1% (w/w) of NPs in the coating composition; C) a substrate coated with a basecoat, a lacquer layer, and a top layer comprising the disclosed coating composition comprising 80% (w/w) lacquer and 20% (w/w) of nanoparticles (NPs), making up a final concentration of 1% (w/w) of NPs in the coating composition; D) a substrate coated with a basecoat, a two lacquer layers, and a top layer comprising a solution with 1% (w/w) NPs.
**Figure 2****:** Schematic representation of A) a substrate comprising an embodiment of a comparative coating composition prepared with amphiphobic commercial additives. B) substrate coated with a basecoat, a lacquer layer, and a top layer of 90% (w/w) lacquer and 10% (w/w) of an additive; C) substrate coated with a basecoat, a lacquer layer, and a top layer of 80% (w/w) lacquer and 20% (w/w) of an additive; D) substrate coated with a basecoat, two layers of a lacquer, and a top layer of an additive.

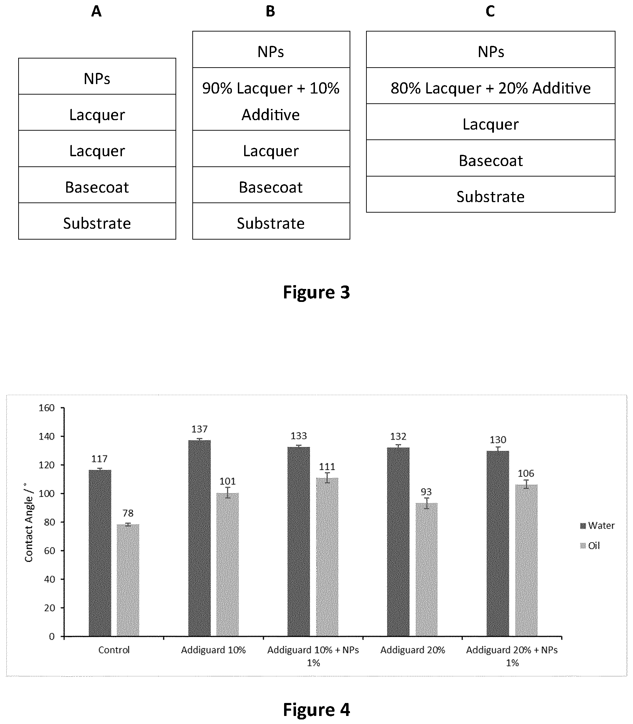

**Figure 3****:** Schematic representation of a substrate coated with A) an embodiment of the disclosed coating composition comprising NPs, amphiphobic additives and its combinations. B) substrate coated with a basecoat, a lacquer layer, a layer comprising 90% (w/w) lacquer and 10% (w/w) of a commercial additive, and a top layer comprising fluorinated silica nanoparticles; C) substrate coated with a basecoat, a lacquer layer, a layer comprising 80% (w/w) lacquer and 20% (w/w) of a commercial additive, and a top layer comprising nanoparticles.
**Figure 4****:** Embodiment of results of contact angles measured with water and oil, after 10 minutes of contact, obtained in PVC substrates coated with a composition comprising a commercial additive, PVC substrates coated with a composition comprising a commercial additive (Addiguard 10% (w/w)) and silica nanoparticles (1% w/w), and the control PVC substrate with no additive or nanoparticles.

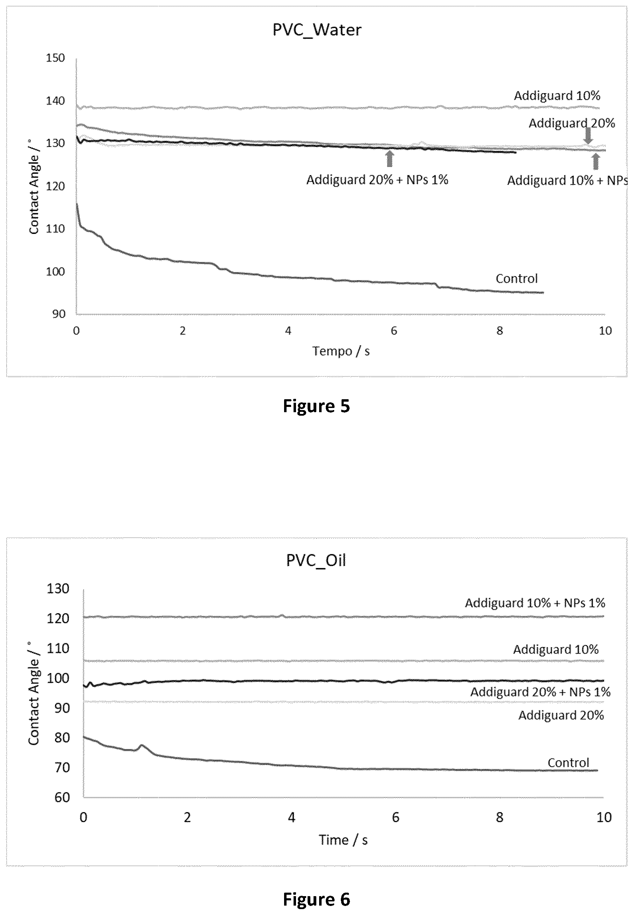

**Figure 5****:** Embodiment of results of contact angles measured over time with water, obtained in PVC substrates coated with a composition comprising commercial additives (Addiguard 10% (w/w) or 20% (w/w)), PVC substrates coated with a composition comprising commercial additives and silica nanoparticles (1% (w/w)), and in the control PVC substrate with no additive or nanoparticles.
**Figure 6****:** Embodiment of results of contact angles measured over time with oil, obtained in PVC substrates coated with a composition comprising commercial additives (Addiguard 10% (w/w) or 20% (w/w)), PVC substrates coated with a composition comprising a commercial additive and silica nanoparticles (1% (w/w)), and in the control PVC substrate with no additive or nanoparticles.

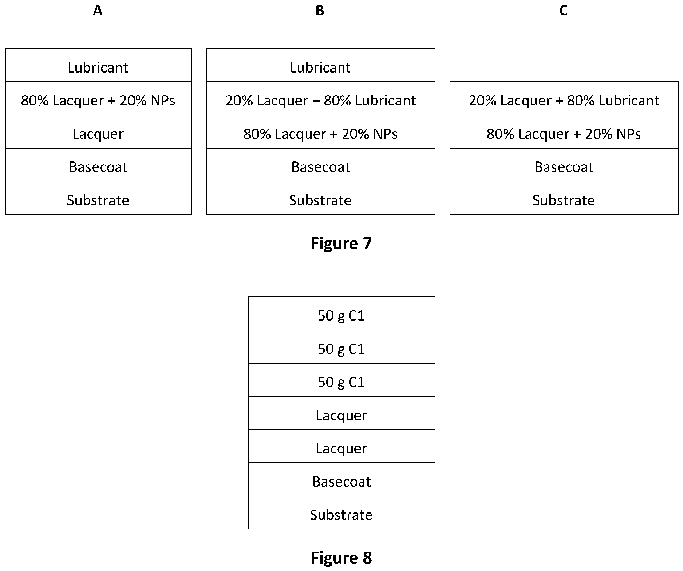

**Figure 7****:** Schematic representation of a substrate prepared using an embodiment of the disclosed coating composition A) substrate coated with a basecoat, a lacquer layer, a layer of 80% (w/w) lacquer and 20% (w/w) of nanoparticles (NPs), making up a final concentration of 1% (w/w) of NPs in the coating composition, and a top layer of lubricant; B) substrate coated with a basecoat, a layer of 80% (w/w) lacquer and 20% (w/w) of nanoparticles (NPs), making up a final concentration of 1% (w/w) of NPs in the coating composition, a layer of a composition comprising 20% (w/w) lacquer and 80% (w/w) of lubricant; and a top layer of lubricant; C) substrate coated with a basecoat, a layer of a composition comprising 80% (w/w) lacquer and 20% (w/w) of nanoparticles (NPs), making up a final concentration of 1% (w/w) of NPs in the coating composition, and a top layer of a composition comprising 20% (w/w) lacquer and 80% (w/w) of lubricant.
**Figure 8****:** Schematic representation of an embodiment of a substrate coated with the disclosed coating film obtained with a C1 precursor.

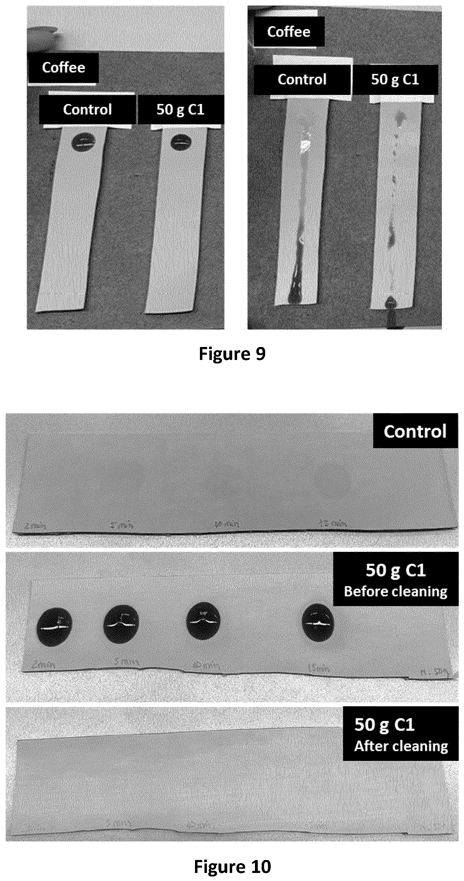

**Figure 9****:** Embodiment of results of a coffee sliding and stain resistance evaluation on a PVC substrate coated with the disclosed coating film using 50 g C1 precursor monomer C1 (50g C1) and a lacquer without C1 (control).
**Figure 10****:** Embodiment of results of a staining resistance test for coffee on a PVC substrate coated with the disclosed coating film using 50g of precursor monomer C1 (50g C1) and a lacquer without C1 (control).

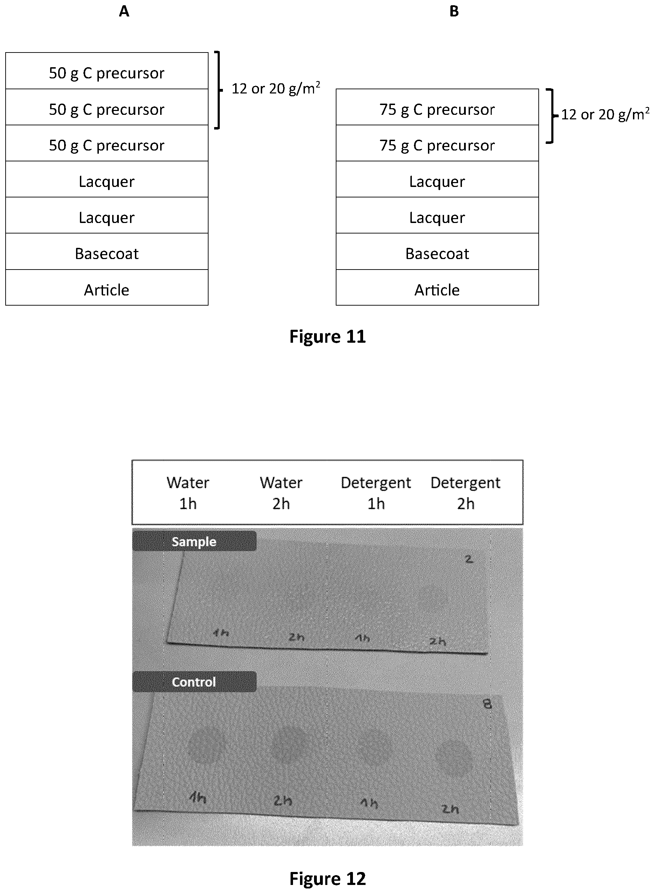

**Figure 11****:** Schematic representation of different embodiments of the disclosed coating film obtained with a C precursor with different coating grammages (12g/m² or 20g/m²) and different amounts of C precursor (50g or 75g).
**Figure 12****:** Embodiment of results of coffee stain resistance evaluation on a PVC substrate coated with a PUR-based lacquer after 1 and 2h of coffee contact and water and detergent cleaning.

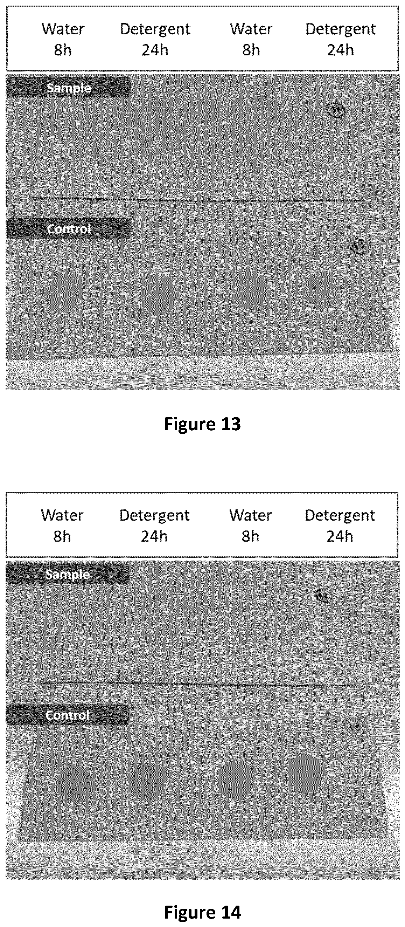

**Figure 13****:** Embodiment of results of coffee stain resistance evaluation on a PVU substrate coated with PUR-based lacquer, after 8 and 24h of coffee contact and water and detergent cleaning.
**Figure 14****:** Embodiment of results of coffee stain resistance evaluation on a PVU substrate coated with PUR-based lacquer after 8 and 24h of coffee contact and water and detergent cleaning.

### DETAILED DESCRIPTION

The present disclosure relates to a coating composition for a fabric or polymeric substrate comprising 0.5-60% (w/w) of silica nanoparticles and a suitable solvent and to a coating film comprising: at least one layer of polydimethylsiloxane obtainable from the polycondensation of a carbon precursor; and a lacquer wherein the at least one layer of polydimethylsiloxane is coated on top of the lacquer. An article comprising the disclosed coating composition or coating film is also disclosed. The present disclosure descrribed the integration of silica nanoparticles into a coating composition that improves the cleanability of artificial leather materials without sacrificing key aesthetic and functional properties. This combination, resulting in a durable, easy-to-clean surface with maintained gloss, color, and texture.

The present disclosure thus relates to coating compositions to improve the cleaning properties of leather or artificial leather articles.

In an embodiment, nanostructured additives were used together with the use of chemical compounds, such as tensioactive/dispersing agents, to improve the dispersion stability of the related nanomaterials.

In another embodiment, other fluorinated polymeric or oligomeric products, adhering promoters, wetting agents, among others, were considered to improve the amphiphobic performance of the final material. The hydrophobic, oleophobic properties and solidity of the disclosed composition were evaluated, as well as the influence of the incorporation of synthesized nanostructured additives and/or other additives in the quality of the material (PVC and TPU), in particular in the colour/appearance and touch.

In an embodiment, the core of silica nanoparticles (SiOz) was synthetised via the classical Stober method with average size of 76 - 136 nm determined by SEM analysis. The fluorinated silica nanoparticles (SiO₂@F), with average size of 94 - 200 nm determined by SEM analysis, and alkyl silica nanoparticles (SiO₂@C18), with average size of 63 - 97 nm determined by SEM analysis, were obtained via in-situ method, where the synthetised SiO₂ nanoparticles were functionalized with a layer of fluorinated organosilane, preferably C6-F, or alkyl organosilane, preferably C18, respectively. At the end, the nanoparticles (NPs) can be submitted to a washing step where the NPs are dispersed in ethanol, centrifuged and the supernatant discarded. The NPs not submitted to the washing step are applied in their reaction medium, such as ethanol.

In an embodiment, the SiO₂, SiO₂@F and SiO₂@C18 nanoparticles are dissolved in a suitable solvent, preferably a polar solvent, such as ethanol, methanol, acetone, or isopropanol, among others, to be used at the desired concentration.

In an embodiment, different commercial lacquers can be used to prepare a substrate, coated with the disclosed composition.

In an embodiment, three lacquers were studied, lacquer S based on PUR, solvents, thickener, silicone and crosslinker; lacquer D based on PUR and crosslinker; and lacquer LM, same as lacquer S but with a lower amount of crosslinker.

In an embodiment, the substrate can be artificial leather, a car seat, a steering wheel, door panel, instrument panel, a PVC substrate, a PVC substrate coated with TPU, among others.

In an embodiment, Figure 1 shows a schematic representation of a coating composition comprising silica nanoparticles (NPs), preferably fluorinated silica nanoparticles (SiO₂@F), combined with a lacquer composition, resulting in an amphiphobic material. Preferably, the coating composition comprises 15% to 85% (w/w) of a suitable lacquer and 15% to 85% (w/w) of a solution comprising nanoparticles, preferably fluorinated silica nanoparticles, more preferably 1% (w/w) of fluorinated silica nanoparticles.

In another embodiment, the coating composition comprises 20% (w/w) of a lacquer and 80% (w/w) of a solution comprising nanoparticles, preferably fluorinated silica nanoparticles, more preferably 1% (w/w) of fluorinated silica nanoparticles. In another embodiment, the coating composition comprises 80% (w/w) of a lacquer and 20% (w/w) of a solution comprising nanoparticles, preferably fluorinated silica nanoparticles, more preferably 1% (w/w) of fluorinated silica nanoparticles.

In an embodiment, the silica nanoparticles, preferably fluorinated silica nanoparticles, are mixed in ethanol in a concentration ranging from 5 to 55 g/L, preferably at a concentration ranging from 8 to 50 g/L. Then, the solution comprising the nanoparticles is mixed with a suitable lacquer, making up the final solution comprising 15% to 85% (w/w) of lacquer and 15% to 85% (w/w) of a solution comprising nanoparticles, preferably fluorinated silica nanoparticles, more preferably 1% (w/w) of fluorinated silica nanoparticles.

Figure 1B depicts a schematic representation of a substrate coated with a basecoat and a lacquer, and a top layer comprising 20% (w/w) of a lacquer and 80% (w/w) of SiO₂@F solution, preferably SiO₂@F solution at 12.5 g/L, making up 1% (w/w) of SiO₂@F at the coating composition (Sample 1B). Figure 1C depicts a schematic representation of a substrate coated with a basecoat and a lacquer, and a top layer comprising 80% (w/w) of a lacquer and 20% (w/w) of a SiO₂@F solution, preferably SiO₂@F solution at 50 g/L, making up 1% (w/w) of SiO₂@F in the coating composition (Sample 1C).

Figure 1D depicts an embodiment of a coated substrate, wherein the substrate is coated with a basecoat, two lacquer layers and a top layer comprising a coating composition comprising 100% (w/w) of a SiO₂@F solution, preferably a SiO₂@F solution where particles are dissolved at 10 g/L, making up a final concentration of 1% (w/w) of SiO₂@F in the coating composition (Sample 1D).

In an embodiment, the cleanability of the coated substrate's surfaces was evaluated by means of a drop test based on ISO 23232 (2009) to determine the WRR (water rate repellence) and ISO 14419 (2010) to determine the ORR (oil rate repellence).

Table 1 shows an embodiment of the results obtained for the drop test for the tested samples as well as for the control sample (sample with lacquer and without nanoparticles). The inclusion of the SiO₂@F nanoparticles in the reaction medium (without the final washing process) presented the best results, in particular regarding oil repellence.

In an embodiment, washed NPs are NPs that before being used in the coating composition were washed with a suitable solvent. The average diameter of these nanoparticles is 200 nm, measured by SEM. Their sizes are different when compared to non-washed NPs. Reactional medium NPs are NPs that are directly added to the lacquer to obtain the coating composition, without the intermediate washing step. The average diameter of these nanoparticles is 115 nm, measured by SEM.

**Table 1. Drop test results on PVC substrate, for different finishing and additive lacquers with SiO₂@F nanoparticles, comparing washed NPs and non-washed NPs, i.e., in reactional medium**

| | | **Washed NPs** | | **Reactional medium NPs** | |
|---|---|---|---|---|---|
| **Lacquer** | **Samples** | **WRR** | **ORR** | **WRR** | **ORR** |
| **Standard S** | **Control** | 3 | - | 3 | - |
| | **Sample 1C** | 2/3 | - | 3 | 2 |
| | **Sample 1D** | 3 | 1/2 | 3/4 | 5 |
| **Standard D** | **Control** | 3 | - | 3 | - |
| | **Sample 1B** | 2 | - | 3 | 5 |
| | **Sample 1C** | 2 | - | 3 | 1 |
| | **Sample 1D** | 2 | - | 4 | 5 |
| **LM** | **Control** | 1 | - | 1 | - |
| | **Sample 1C** | 1 | 1/2 | 0/1 | - |
| | **Sample 1D** | 2 | 1/2 | 6 | 4 |

In an embodiment, among the three lacquers studied, the S lacquer, (based on PUR, Solvents, thickener, silicone and crosslinker) and D lacquer (based on PUR and crosslinker) showed better results when compared with the results obtained with LM lacquer (a lacquer similar to lacquer S but with a lower amount of crosslinker).

In an embodiment for better results, the SiO₂@F nanoparticles are applied over a lacquer layer (Sample 1D). Table 2 describes the comparison of water and oil drop test results between the increase in the concentration of SiO₂@F NPs (10 and 20 g/L) in the preparing solution, resulting in a final concentration of 1% (w/w) and 2% (w/w) of SiO₂@F, respectively; and the coating grammage (12 and 20 g/m²) of the layer comprising NPs. The increase of lacquer grammage leads to better results compared to when concentration of SiO₂@F was increased.

**Table 2. Drop test results for different finishing and lacquers with SiO2@F nanoparticles comparing NPs concentration and coating grammage**

| **Lacquer** | **Coating grammage (g/m²)** | **NPs concentration (g/L)** | **WRR** | **ORR** |
|---|---|---|---|---|
| **Standard S** | **Control** | - | 3 | - |
| | **12** | **10** | 4/5 | 3 |
| | | **20** | 6/7 | 4 |
| | **20** | **20** | 7 | 3 |
| **Standard D** | **Control** | - | 3 | - |
| | **12** | **10** | 4 | 4 |
| | | **20** | 6/7 | 4 |
| | **20** | **20** | 6 | 4 |
| **LM** | **Control** | - | 1 | - |
| | **12** | **10** | 4 | 3 |
| | | **20** | 4 | 3 |
| | **20** | **20** | 5 | 2 |

It was also possible to verify that, in general, the increase in weight of NP per sample produced more promising and better results in view of the increasing of the concentration of nanoparticles.

In an embodiment, commercial amphiphobic additives as Fluorine C6 compound (such as Addiguard C6/75, Addiguard C6/6003), Water-based dispersion based on polyethylene wax (such as Deurex E0908 W), Water-based dispersion based on polypropylene wax (such as Deurex P3808 W), Micronized polypropylene wax (such as Deurex P3820 M), Micronized Polyethylene wax (such as Deurex E0920 M), or Dispersion of a fluoroacrylate copolymer (such as Phobol CP-C) were used as amphiphobic additive as comparative examples.

Figure 2A shows a general schematic representation of a substrate coated with a coating composition comprising a suitable lacquer and a commercial additive. Figure 2B depicts an embodiment wherein the substrate is coated with a basecoat, a lacquer and then coated with a top layer of a composition comprising 90% (w/w) of a lacquer and 10% (w/w) of a commercial amphiphobic additive (Sample 2B). Figure 2C depicts another embodiment, wherein the substrate is coated with a basecoat, a lacquer and then coated with a top layer of a composition comprising 80% (w/w) of a lacquer and 20% (w/w) of a commercial amphiphobic additive (Sample 2C). Figure 2D depicts a comparative example, wherein a substrate is coated with a basecoat, two layers of lacquer and a top layer of a commercial amphiphobic additive (Sample 2D).

Table 3 shows an embodiment of the results obtained for the drop test for the tested samples as well as for the control sample (sample with lacquer and without commercial additives). The addition of the amphiphobic commercial additives significantly improves the water and oil repellence rate for the lacquers studied.

**Table 3. Drop test results for different finishing and additive lacquers with two distinct commercial amphiphobic additives.**

| | | **Fluorine C6 compound (Addiguard C6/6003)** | | **Dispersion of a fluoroacrylate copolymer (Phobol CP-C)** | |
|---|---|---|---|---|---|
| **Lacquer** | **Sample** | **WRR** | **ORR** | **WRR** | **ORR** |
| **Standard S** | **Control** | 3 | - | 3 | - |
| | **2B** | 6/7 | 4 | 5/6 | 5 |
| | **2C** | 6/7 | 3/4 | 5 | 4 |
| **Standard D** | **Control** | 3 | - | 3 | - |
| | **2B** | 7 | 4 | No effect | |
| | **2C** | 6/7 | 3/4 | 4 | 7 |
| **LM** | **Control** | 1 | - | 1 | - |
| | **2B** | 7 | 4 | 5 | 5/6 |
| | **2C** | 6 | 4 | 7 | 5 |

In an embodiment, Figure 3A shows a schematic representation of a substrate coated with a basecoat, two layers of lacquer, and a top layer comprising a coating composition comprising 100% (w/w) of a SiO₂@F solution, preferably a SiO₂@F solution where particles are dissolved at 10 g/L, making up a final concentration of 1% (w/w) of SiO₂@F in the coating composition (Sample 1D). Figure 3B shows an embodiment of a substrate coated with a basecoat, a lacquer, a layer comprising 90% (w/w) of a lacquer and 10% (w/w) of a commercial amphiphobic additive, and a top layer comprising a coating composition comprising 100% (w/w) of a SiO₂@F solution, preferably a SiO₂@F solution where particles are dissolved at 10 g/L, making up a final concentration of 1% (w/w) of SiO₂@F in the coating composition (Sample 3B). Figure 3C shows another embodiment of a substrate, wherein the substrate is coated with a basecoat, a lacquer layer, a layer comprising 80% (w/w) of a lacquer and 20% (w/w) of a commercial amphiphobic additive, and a top layer comprising a coating composition comprising 100% (w/w) of a SiO₂@F solution, preferably a SiO₂@F solution where particles are dissolved at 10 g/L, making up a final concentration of 1% (w/w) of SiO₂@F in the coating composition (Sample 3C).

Table 4 shows an embodiment of the results obtained for the drop test for the tested samples (Samples 1D, 3B and 3C) as well as for the control sample (sample with lacquer and without commercial additives or nanoparticles). The introduction of nanoparticles did not present significant differences regarding water and oil repellence rate, compared to samples comprising commercial additives with only. However, the higher performance and durability of the articles coated with both a commercial additive and nanoparticles may justify the use of both approaches combined.

**Table 4. Drop test results for different finishing and additive lacquers with SiO₂@F nanoparticles and amphiphobic commercial additives comparing NPs, commercial additives (Addiguard) and the synergy between the different components.**

| | **Sample 1D** | | **Sample 3B** | | **Sample 3C** | | **Control** | |
|---|---|---|---|---|---|---|---|---|
| **Lacquer** | **WRR** | **ORR** | **WRR** | **ORR** | **WRR** | **ORR** | **WRR** | **ORR** |
| **Standard S** | 3/4 | 5 | 6/7 | 4 | 6/7 | 4 | 3 | - |
| **Standard D** | 4 | 5 | 7 | 4 | 7 | 3 | 3 | - |
| **LM** | 6 | 4 | 7 | 4 | 7 | 4 | 1 | - |

In an embodiment, the samples were characterized by drop test and the contact angle for water and oil were determined over 10 seconds. The contact angle was determined using a tensiometer by the sessile drop method. The method consists on placing a droplet of the test liquid (i.e., either water or oil) on the surface and measure the contact angle formed at the three-phase interface (solid-liquid-gas).

Table 5 shows an embodiment of the results obtained for the drop test tested samples as well as for the control sample (sample with lacquer S and without commercial additive or nanoparticles). The rate repellence obtained for water and oil were similar for water and oil and there were no improvements with the concentration of amphiphobic additive Addiguard increase. Additionally, there were no significant differences with the addition of nanoparticles in the final layer. However, the performance and durability may justify the use of both approaches combined.

**Table 5. Drop test results for different finishing and additive lacquers with SiO2@F nanoparticles and amphiphobic additives.**

| **Sample** | **WRR** | **ORR** |
|---|---|---|
| **2B** | 6/7 | 5 |
| **3B** | 8 | 5 |
| **2C** | 6/7 | 5 |
| **3C** | 7 | 5 |
| **Control** | 3 | - |

Figure 4 shows an embodiment of results for the static contact angle for water and oil solvents for samples for samples 2B (Addiguard 10%), 3B (Addiguard 10% + NPs 1%), 2C (Addiguard 20%) and 3C (Addiguard 20% + NPs 1%) and the respective control (without amphiphobic additive and nanoparticles). In general, it was possible to verify a significant increase in the contact angles obtained for both water and oil in the functionalized samples compared to the control samples. For the water component, the tendency obtained in the drop test was verified, as no significant differences between the samples functionalized only with the amphiphobic additive were found, compared to the functionalized with the amphiphobic additive followed by the application of a coating composition comprising nanoparticles in a reaction medium, at 1% (w/w).

Figure 5 and Figure 6 show the variation of the contact angle, measured over 10 seconds for water and oil solvents, for samples 2B (Addiguard 10%), 3B (Addiguard 10% + NPs 1%), 2C (Addiguard 20%) and 3C (Addiguard 20% + NPs 1%). It was possible to observe that the contact angles remain constant over time for the two liquids tested. For water (Figure 5), the sample produced with Addiguard 10% (w/w) showed the highest contact angle, and it was found that increasing the concentration of Addiguard and nanoparticles did not significantly affect the results. For the oil (Figure 6), it was possible to verify that higher contact angles were obtained with the application of the nanoparticles in the outermost layer, with an improvement in performance compared to samples without nanoparticles. It was also verified, once again, that increasing the concentration of Addiguard did not significantly affect the results.

In another embodiment, substrates with intrinsic omniphobic properties, that present good performance and durability, were produced by the "Slippery Liquid-Infused Porous Surfaces" (SLIPS) approach. The SLIPS approach corresponds to the development of surfaces composed of rough nanostructured materials infused with repellent lubricant liquids that are trapped in the micropores, creating smooth surfaces infused with liquids at the molecular level.

In an embodiment, silica nanoparticles (NPs), preferably SiO₂ and SiO₂@C18, were used. Functionalized SiO₂@C18 nanoparticles can be used to eliminate the need for fluoride use.

In an embodiment, a coating composition for omniphobic SLIPS approach comprises silica nanoparticles (NPs), preferably SiO₂@C18, combined with a lacquer composition. Preferably, the coating composition comprises 15% to 85% (w/w) of a lacquer and 15% to 85% (w/w) of silica nanoparticles.

In another embodiment, the coating composition for omniphobic SLIPS approach comprises a lubricant, that can be combined with a lacquer composition. Preferably, the coating composition comprises 50% to 100% (w/w) of a lubricant and up to 50% (w/w) of silica nanoparticles.

In an embodiment, the silica nanoparticles are mixed with the lacquer in a concentration ranging from 12 to 55 g/L, preferably at a concentration ranging from 12.5 to 50 g/L.

In an embodiment, different lubricant liquids can be used, including Glyceryl Mono Oleate compositions, such as Kemfluid 229, or Micronized polypropylene wax, such as Deurex 3820.

Figure 7 shows a schematic representation of different embodiments of a multilayer construct comprising the disclosed coating composition, when using the omniphobic SLIPS approach. The 1^{st} and 2^{nd} layers are the same for the different embodiments shown, and comprise a substrate and a basecoat. In Figure 7A, the 3^{rd} layer of the multilayer construct comprises a lacquer, the 4^{th} layer comprises 80% (w/w) of a lacquer and 20% (w/w) of NPs at 50 g/L (making up a final concentration of 1% (w/w) of NPs in this layer) and a top layer of a lubricant. In Figure 7B and Figure 7C, the 3^{rd} layer comprises 80% (w/w) of a lacquer and 20% (w/w) of NPs at 50 g/L (making up a final concentration of 1% (w/w) of NPs in this layer), and the 4^{th} layer comprises 20% (w/w) of a lacquer and 80% (w/w) of a lubricant. The embodiment represented in Figure 7B, further comprises a top layer of a lubricant.

In an embodiment, the sliding speed and mark for water and coffee were evaluated. A drop of the test liquids was placed on the surface of the substrate. The samples were tilted equally in order to evaluate the speed of the drop's sliding and the mark that the drop left during its sliding. For water, it was found that the samples produced with the lacquer D showed faster sliding, while for coffee the drop slid faster in the sample produced with the D lacquer and a combination of Kemfluid and Deurex applied on the last layer.

In another embodiment, substrates with intrinsic omniphobic properties, that present good performance and durability, were produced using "Slippery Omniphobic Covalently Attached Liquids" (SOCAL) approach. The SOCAL approach consists of a treatment that presents a liquid-like behaviour on the surface of the material, but which is based on flexible groups covalently bound to the substrate. These groups are not dissolved or displaced after contact with liquids. The approach consists of an expeditious method that usually involves the preparation of PDMS groups, obtaining SOCAL surfaces from the polycondensation of dimethylmethoxysilane by acid catalysis in sulfuric acid, using water as co-monomer of polymerization. The obtained coating presents low sliding angles and hysteresis of the contact angle below 1 and shows a uniform, homogeneous, and transparent coating, with excellent thermal stability.

In an embodiment, different carbon (C) precursors can be used to prepared the SOCAL solution, such as methyltrimethoxysilane (C1, CAS 1185-55-3), methoxy-[[methoxy(dimethyl)silyl]methyl]-dimethylsilane (C2, CAS 18297-76-2) and octadecyltrimethoxysilane (C18, CAS 3069-42-9).

In a further embodiment, the SOCAL pre-coating solution comprises 100 g of isopropanol, 1 g of sulfuric acid and the selected C precursor. The solution is mixed for 30 seconds and left at room temperature for 30 minutes before applications. Preferably, the pre-coating solution comprises 10 to 80 g of the selected C precursor.

In an embodiment, the pre-treatment processes, functionalization, and preparation of the SOCAL solutions were evaluated.

In an embodiment, the SOCAL solution is prepared using the C1, C2 and C18 monomers. In another embodiment, commercially available PDMS were used: Polydimethylsiloxane (PDMS), Hydroxy terminated polydimethylsiloxane (PDMS-OH), Amine terminated polydimethylsiloxane (PDMS-NH2).

Figure 8 shows a schematic representation of an embodiment of a substrate coated with the disclosed coating composition when using the SOCAL approach. The substrate is coated, from bottom to top, with a basecoat, two layers of lacquer and three layers of SOCAL solution prepared with 50 g of C1.

In an embodiment, the sliding speed and mark for coffee were evaluated. The stain resistance and easy to clean in accordance with adaptation of automotive sector standards, such as ISO 2812-2:2018, were also evaluated. Drops of the test liquid are deposited on the substrate, leaving a defined spacing between them so that there is no overlapping of stains. After the estimated contact time, the stain is cleaned and removed, using different cleaning methods (paper, wet sponge or sponge with detergent).

In an embodiment, substrates coated with SOCAL solution present a good sliding performance for distilled water, mineral oil and coffee, with imperceptible entrainment mark for these liquids (Figure 9) and without any staining for coffee after a contact time of at least 15 minutes (Figure 10).

Figure 11 shows a schematic representation of the different tested conditions coated with SOCAL solution, which were obtained using different concentrations of precursor, number of SOCAL solution layers and weight of the different layers.

In an embodiment, substrates coated with SOCAL solution were evaluated regarding the stain resistance and easy to clean in accordance with adaptation to automotive sector standards (ISO 2812-2:2018).

Figure 12, Figure 13 and Figure 14 show the obtained materials where it was possible to observe a good resistance to coffee stains for up to 24h, for PVC substrates.

For the scope and interpretation of the present disclosure, a basecoat can be selected from a list comprising polyurethane, acrylates, silicon, vinyl, PUR-vinyl, vinyl-acrylate or mixtures thereof.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. Coating composition for a fabric or polymeric substrate comprising 0.5-60% (w/w) of silica nanoparticles and a suitable polar solvent,
wherein the silica nanoparticles are fluorinated silica nanoparticles and/or alkyl silica nanoparticles;
wherein the size of the silica nanoparticles ranges from 50-120 nm as measured by scanning electron microscopy.

2. Coating composition according to any of the previous claims wherein the alkyl silica nanoparticles comprise an alkyl organosilane, preferably an alkyl C18 and/or wherein the fluorinated silica nanoparticles comprise a fluorinated organosilane, preferably C6- fluorinated organosilane.

3. Coating composition according to any of the previous claims further comprising an additive, wherein the additive is selected from a list consisting of: fluorine C6 compounds, water-based dispersion based on polyethylene wax, water-based dispersion based on polypropylene wax, micronized polypropylene wax, micronized Polyethylene wax, dispersion of a fluoroacrylate copolymer, glyceryl mono oleate composition, N, N'-ethylene-bis-stearamide or combinations thereof.

4. Coating composition according to the previous claim comprising:
0.5-30 %(w/w) of silica nanoparticles; preferably 1-20% (w/w) of silica nanoparticles; and
5-80 % (w/w) of the additive; preferably 10-20 % (w/w) of the additive.

5. Coating composition according to any of the previous claims further comprising a lacquer, hand modifiers, crosslinkers, co-solvents, stabilizers, rheological modifiers, levelling agents, mating or glossing agents, or mixtures thereof.

6. Coating composition according to any of the previous claims 5-7 comprising:
1-20% (w/w) of silica nanoparticles; and
10-20 % (w/w) of the additive, wherein the additive is selected from glyceryl mono oleate composition, micronized polypropylene wax, N, N'-ethylene-bis-stearamide.

7. Coating composition according to any of the previous claims 5-7 comprising:
1-20% (w/w) of silica nanoparticles; lacquer and
10-20 % (w/w) of the additive, wherein the additive is selected form a list comprising fluorine C6 compounds, water-based dispersion based on polyethylene wax, water-based dispersion based on polypropylene wax, micronized polypropylene wax, micronized Polyethylene wax, dispersion of a fluoroacrylate copolymer, and combinations thereof.

8. Coating composition according to the previous claim wherein the lacquer is polyurethane-based lacquer; preferably the lacquer further comprises a solvent, a thickener, a silicone and/or a crosslinker.

9. Coating composition according to any of the previous claims comprising:
1-60% (w/w) of silica nanoparticles, preferably 1-20% (w/w) of silica nanoparticles; and
15-99 % (w/w) of a lacquer; preferably 20-99 % (w/w) of a lacquer.

10. Coating composition according to the previous claim wherein the size of the silica nanoparticles ranges from 100 - 115 nm as measured by scanning electron microscopy.

11. Coating composition according to any of the previous claims wherein the substrate is artificial leather, polyvinyl chloride, polyurethane, thermoplastic elastomers, or combinations thereof.

12. Coating composition according to any of the previous claims wherein the suitable polar solvent is ethanol, methanol, acetone, isopropanol, or mixtures thereof.

13. Kit comprising a first part comprising a solution of 1-60% (w/w) of silica nanoparticles and suitable solvent and a second part comprising a solution comprising a lacquer and an additive; wherein the second part comprises a solution comprising 80 to 90% (w/w) of a lacquer and 10 to 20% (w/w) of an additive.

14. Kit according to the previous claim wherein the lacquer is polyurethane-based lacquer, preferably further comprising a solvent, a thickener, a silicone and/or a crosslinker; and/or
wherein the additive is selected from a list consisting of: fluorine C6 compounds, water-based dispersion based on polyethylene wax, water-based dispersion based on polypropylene wax, micronized polypropylene wax, micronized Polyethylene wax, dispersion of a fluoroacrylate copolymer, glyceryl mono oleate composition, N, N'-ethylene-bis-stearamide or combinations thereof.

15. Coating film comprising:
at least one layer of polydimethylsiloxane obtainable from the polycondensation of a carbon precursor; and
a lacquer;
wherein the at least one layer of polydimethylsiloxane is coated on top of the lacquer;
wherein the carbon precursor is selected from a C1 monomer, C2 monomer or C18 monomer;
preferably wherein the carbon precursor is selected form a list comprising methyltrimetoxysilane (C1), methoxy-[[methoxy(dimethyl)silyl]methyl]-dimethylsilane (C2), and octadecyltrimethoxysilane (C18); and/or wherein the lacquer is polyurethane-based lacquer.

16. Article comprising the coating composition or coating film described in any of the previous claims; preferably wherein the article further comprises a basecoat layer; more preferably wherein said article is an upholstery article, a seat, a door panel, or an automotive interior trim.
